# EUROPÄISCHE PATENTSCHRIFT

(11) **EP 1 022 998 B1**
(45) Veröffentlichungstag und Bekanntmachung des Hinweises auf die Patenterteilung: **06.12.2006**
(21) Anmeldenummer: 99945998.5
(22) Anmeldetag: 19.08.1999
(51) Int. Cl.: A61C 13/097

(54) **ZAHNSATZ**
DENTURE SET
SERIE COMPLETE DE DENTS

(30) Priorität: 20.08.1998 DE 19837748
(43) Veröffentlichungstag der Anmeldung: 02.08.2000
(73) Patentinhaber: Dental Consulting Mönkmeyer S.L., 07660 Cala d'Or (ES)
(72) Erfinder: MÖNKMEYER, Ulrich, E-07660 Cala d'Or (ES)
(74) Vertreter: Kunz, Herbert
(86) Internationale Anmeldenummer: PCT/EP1999/006079
(87) Internationale Veröffentlichungsnummer: WO 2000/010483

(56) Entgegenhaltungen:
- DE-C- 19 508 762
- DE-U- 29 716 622
- US-A- 3 105 300
- US-A- 4 626 215
- US-A- 5 326 262

## Beschreibung

Die Erfindung betrifft die Zahnsatze aus vorgefertigten Zähnen, die mindestens aus einem ersten aus einer für den einen Kiefer vorgesehenen Gruppe von Zähnen und mindestens aus einem zweiten aus einer für den anderen Kiefer vorgesehenen Gruppe von Antagonisten gewählten Zähnen bestehen, wobei die Zähne auf den den Antagonisten gegenüberliegend angeordneten Flächen Kontaktpunkte aufweisen, an dem der Antagonist zur Anlage gelangt gemäß den vorliegenden Ansprüchen 1 und 11.

Bisher geht man bei der Herstellung von künstlichen Gebissen in der Weise vor, daß der Zahntechniker aus einem vorgefertigten Satz künstlicher Zähne die einzelnen Zähne zunächst in einem Artikulator auf einem vom Kiefer des Patienten abgenommenen Modell in Wachs aufstellt. Bei der Aufstellung orientiert er sich an bestimmten Prinzipien. So soll der Abschluß der Seitenzähne, also die Spitzen der Zahnhöcker, auf einer Linie liegen, die der Kurve nach v. Spee entspricht. Die bukkolingualen Höckertangenten sollen, zunehmend vom zweiten Prämolaren bis zum zweiten Molaren, leicht gegen den Mundboden geneigt sein. Letzteres entspricht der Theorie von Wilson, nach der die Zahnhöcker auf einer transversal verlaufenden Kurve liegen sollen. Bei der Aufstellung der Zähne kann daher ein Ausschnitt einer Kugelkalotte verwendet werden, an der die Zähne jeweils mit ihrem oberen Abschluß zur Anlage gelangen. Dieses Vorgehen entspricht der Theorie von Monson. Nach der Aufstellung der Zähne in Wachs, einer Zwischereinprobe des Wachsmodells am Patienten und anschließender Polymerisation wird die Prothese in einem Artikulator eingeschliffen, um den Eingriff der Zähne von Ober- und Unterkiefer anzupassen. Man strebt dabei an, nur punktförmige Kontakte und keine Kontaktflächen zuzulassen. Ferner ist gefordert, das Gebiß beidseitig auszubalancieren, d.h. in Schlußstellung bei vollkommener Interkuspidation sollen die Molaren von Ober- und Unterkiefer beidseitig ineinandergreifen und Kontaktpunkte ausbilden. Durch die beidseitige Ausbalancierung, die nicht den natürlichen Verhältnissen entspricht, soll ein Aushebeln und damit Wegkippen des Gebisses in der Interkuspidationsstellung vermieden werden. Diese Anpassung erfolgt, indem der Zahntechniker nach dem Aufstellen der Zähne die Kauflächen der Zähne solange durch Abschleifen bearbeitet, bis die Zähne der beiden Kieferhälften ausbalanciert und die gewünschte Zahl von Kontaktpunkten erzeugt ist. Nach der Fertigstellung wird das Gebiß in den Mund des Patienten eingesetzt und durch den Zahnarzt weiter bearbeitet, bis der Patient subjektiv das Gefühl einer akzeptablen Anpassung des Gebisses hat.

Bei bekannten künstlichen Gebissen ergibt sich die genaue Lokalisation der Kontaktpunkte zwischen den Zähnen des Ober- und Unterkiefers also erst während der Bearbeitung. Durch die Bearbeitung während der Anpassung wird außerdem die vertikale Höhe verringert. Unter "vertikaler Höhe" wird die relative Lage von Ober- und Unterkiefer verstanden, also letztlich der Abstand zwischen den Kiefern, gemessen in vertikaler Richtung. Durch das Abschleifen der Zähne während der Anpassung des Gebisses wird dieser Abstand jedoch verringert. Die Gestaltung des Gebisses entfernt sich also während des Aufbaus und der Anpassung immer weiter von den durch den Kiefer vorgegebenen natürlichen Verhältnissen. Im Ergebnis wird die Lage der Kiefer zueinander und damit die Lage der Kondylen im Gelenk durch die Positionierung der künstlichen Zähne im Gebiß bestimmt. Dies steht Im Gegensatz zu den natürlichen Verhältnissen, bei denen die Lage der Kondylen im Gelenk und die Form des Kiefers letztlich die Lage der Zähne bestimmt, da die Zähne solange ihre Position verändern, bis sie sich den durch Kiefer und Kiefergelenk vorgegebenen Verhältnissen angepaßt haben.

Als Folge treten bei den mit bekannten künstlichen Zähnen gefertigten Gebissen eine Reihe von Problemen auf, die eine schwere Belastung für den Patienten darstellen.

Da die Position der Kondylen im Gelenk durch die Anordnung der künstlichen Zähne festgelegt ist, führt dies, soweit diese Position nicht der natürlichen übereinstimmt, zu Muskelverspannungen und Muskelschmerzen, da der Kiefer in der Schlußstellung in eine unnatürliche Lage gezwungen wird. Zur Abhilfe schleift der Zahnarzt weitere Kontaktpunkte ab. Er verringert dadurch weiter die vertikale Höhe und verschiebt damit unter Umständen die Kondylen noch weiter aus ihrer natürlichen Position. Dem Patienten wird damit die Möglichkeit versperrt, je zu einem gut sitzenden Zahnersatz zu kommen und es bleibt letztlich nur der Weg einer Neuherstellung des Gebisses, wobei einem guten Sitz wiederum die selben Schwierigkeiten entgegenstehen.

Weiterhin wird durch die in der Interkuspidationsstellung auftretende Verschiebung der Kondylen aus ihrer natürlichen Position eine rasche Abnutzung des Gebisses verursacht, Beim Schließen des Kiefers treffen die Zahnhöcker außerhalb der Schlußstellung auf den Antagonisten auf und gleiten dann entlang dessen Oberfläche in die Schlußstellung. Schon nach kurzer Tragezeit bilden sich Abnutzungsflächen aus, die zur Ausbildung weiterer Kontaktpunkte bzw. -flächen führen.

Da sich die endgültige Anordnung der Kontaktpunkte erst während der Bearbeitung ergibt, ist ferner nicht gewährleistet, daß sich die in den Zahn eingeleiteten Kräfte zu einer Resultierenden in Richtung der Zahnachse addieren. Es können daher hohe Belastungen im Zahn mit einer horizontalen Kraftkomponente auftreten, was ebenfalls zu einem frühzeitigen Verschleiß des Zahnersatzes führt.

Die US 5,326, 262 zeigt eine Zahnsatz, der so aufgestellt wird, dass die Höckerspitzen auf den Kompensationskurven nach von Spee und Wilson Kontakte machen.

Ein Nachteil dieser zufälligen Anordnung der Kontaktpunkte besteht darin, daß bei der Schließbewegung nicht alle Kontaktpunkte gleichzeitig ausgebildet werden. Ferner können auch überzählige Kontaktpunkte auftreten. Dies führt dazu, daß der Patient das Gefühl für die Schlußstellung beim Beißvorgang verliert, was als äußerst störend empfunden wird. Schließlich können Kontaktpunkte auch auf schrägen Flächen zu liegen kommen. Bei der Schließbewegung besteht dann die Gefahr, daß der Antagonist abrutscht und damit hohe Spitzenbelastungen im Zahn erzeugt werden.

Bisher bekannte künstliche Zähne für einen Zahnersatz bzw. ein künstliches Gebiß berücksichtigen die biomechanischen Bedingungen, die durch die Bewegungen des Kiefers vorgegeben werden nicht bzw. nur ungenügend. So ist die Gestaltung des in der DE 195 087 62 C2 offenbarten Zahnsatzes lediglich auf die Kontakte zwischen gegenüber angeordneten Zähnen in einem statischen Zustand der maximalen Interkuspidation ausgerichtet. Unberücksichtigt bleiben die Beziehungen der Zahnflächen während der natürlichen Bewegungen des Kiefers.

Aufgabe der Erfindung ist daher, einen Zahnsatz aus künstlichen Zähnen zur Verfügung zu stellen, bei dem eine bessere Anpassung des künstlichen Gebisses an die durch die Position der Kondylen im Kiefergelenk und deren Bewegungsbahn bestimmten anatomischen Bedingungen des Patienten ermöglicht wird.

Die Aufgabe wird durch einen Zahnsatz gemäß der Ansprüche 1 und 11 gelöst. Weitere bevorzugte Ausführungform sind in den Unteransprüchen genannt.

Insbesondere dadurch, daß in der jeweiligen Fossa eines Molaren bzw. Prämolaren jeweils mindestens drei Kontaktpunkte (5) vorgesehen sind, an denen in Interkuspidationsstellung ein Stampfhöcker des Antagonisten zur Anlage gelangt, ergibt sich eine wesentlich bessere Prothese. Die Molaren bilden dabei mehrere Kontaktpunkte aus, während zwischen den Eck- und Schneidezähnen nur ein oder zwei Kontaktpunkte ausgebildet werden.

Wenn pro Molaren oder Prämolaren mindestens fünf Kontaktpunkte vorgesehen sind, macht jeder Prämolar oder Molar mit seinem Stampfhöcker zum Stampfhöcker des Antagonisten einen gemeinsamen Kontaktpunkt.

Da bisher der obere Abschluß der künstlichen Zähne auf den Kompensationskurven angeordnet war, ergab sich eine unbestimmte Lage der Kontaktpunkte. Beim erfindungsgemäßen Zahnsatz ist die Lage der Kontaktpunkte dadurch vorbestimmt, daß die Kontaktpunkte auf der sphärischen Kurve von Monson angeordnet sind. Die Positionierung der künstlichen Zähne ist daher durch die Kurve von Monson bestimmt. Es ist eine Verschiebung des Zahnes entlang des Kieferbogens in distaler bzw. mesialer Richtung möglich, wobei die Kontaktpunkte stets auf der Kurve von Monson liegen. Bei einer Verschiebung muß daher auch kein Verlust in der vertikalen Höhe in Kauf genommen werden. Die sphärische Kurve von Monson bildet einen Ausschnitt aus einer Kugelfläche. Durch die Krümmung der Kurve von Monson kann die Neigung der Gelenkbahn ausgeglichen werden und damit eine Anpassung des Gebisses an den Neigungswinkel der Höcker erfolgen. Die Anordnung der Kontaktpunkte innerhalb eines Zahns soll möglichst nahe an einer Ebene erfolgen, die durch die Kurve nach Monson bestimmt ist. Dabei ist allerdings zu berücksichtigen, daß diese Kurve nur Modellvorstellungen darstellt. Es hat sich jedoch gezeigt, daß geringfügige Abweichungen von dem geforderten Idealzustand, die durch die individuellen anatomischen Unterschiede zwischen den verschiedenen Patienten einerseits und der Forderung nach einem standardisierten Zahn andererseits bedingt sind, durch die Beziehungen der Antagonistenpaare ausgeglichen werden. Typisch sind Abweichungen in der Größenordnung von 5% des Zahndurchmessers.

Da alle Kontaktpunkte auf gleicher Höhe liegen, ergibt sich als weiterer Vorteil, daß bei einer Öffnungsbewegung alle Kontakte zwischen den Molaren des Ober- und Unterkiefers gleichzeitig gelöst, bzw. bei einer Schließbewegung gleichzeitig gebildet werden. Insbesondere beim letzteren Bewegungsvorgang ergibt sich daraus eine gleichmäßige Kraftverteilung auf alle Zähne, d.h. Kraftspitzen, die bei vorzeitiger Kontaktbildung zwischen einzelnen Zähnen unvermeidlich sind, treten nicht auf.

Eine Zentrierung des Stampfhöckers des Antagonisten in der Fossa des künstlichen Zahns erfolgt, indem in der Fossa des Zahns jeweils drei Anlagepunkten vorgesehen sind, an denen in Interkuspidationsstellung ein Stampfhöcker des Antagonisten zur Anlage gelangt. Die Anlagepunkte bilden ein Dreieck, dessen Fläche annähernd senkrecht zur Zahnachse angeordnet ist. Eine leichte Neigung der Dreiecksfläche ergibt sich durch die Lage der Kontaktpunkte auf der Kurve von Monson, die näherungsweise einen Ausschnitt aus einer Kugel bildet.

Die Spitze des Stampfhöckers kann harmonisch in die vorbestimmte Stopposition gleiten, wenn die in der Fossa vorgesehenen Kontaktpunkte auf einer Kugelfläche angeordnet sind. Durch die Kugelfläche ist es nicht erforderlich, daß die Spitze des Stampfhöckers sich auf einer exakt vorbestimmten Bahn in die Schlußstellung bewegt. Es werden kleinere Abweichungen von der vorbestimmten Bahn toleriert und die Spitze des Stampfhöckers in die Schlußstellung dirigiert, indem diese mit ihren seitlichen Flächen auf den Kugelflächen entlanggleitet.

Ein Abrutschen der Spitze des Stampfhöckers wird vermieden, wenn in der Fossa Dreiecksleisten und/oder Randleisten vorgesehen sind und die Kontaktpunkte auf den Abhängen der Dreiecksleisten und/oder Randleisten angeordnet sind.

Eine harmonische Öffnungsbewegung wird ermöglicht, wenn benachbart zu den Dreiecksleisten und ausgehend von den Kontaktpunkten Konkavitäten in Richtung der Laterotrusions- und/oder der Protrusions- und/oder der Lateroprotrusions- und/oder der Mediotrusions- und/oder der surtrusiven Retrusionsbewegung des Unterkiefers angeordnet sind. Die Spitze des Stampfhöckers kann sich dann in allen natürlichen Bewegungsrichtungen des Kiefers aus der Stopposition entfernen, ohne dabei mit durch Scherhöcker oder Randleiste gebildeten Hindernissen zu kollidieren.

Eine gute Kauwirkung wird erzeugt, wenn das Verhältnis der vom Umfang des Zahnes in Aufsicht gebildeten Fläche zur lichten Fläche des okklusalen Tisches 55 -65% beträgt.

Die Positionierung des künstlichen Zahns in der vertikalen Richtung wird erleichtert, indem auf der mesialen und/oder der distalen Randleiste des Zahns ein Randleistenkontakt vorgesehen ist. Der Randleistenkontakt befindet sich auf dem höchsten Punkt der Randleisten. Beim Aufstellen der Zähne können die Randleistenkontakte benachbarter Zähne in derselben Höhe ausgerichtet werden, wodurch sämtliche Kontaktpunkte, bedingt durch ihre räumliche Beziehung zur Markierung, notwendigerweise auf des Kurve von Monson zu liegen kommen. Eine Ausrichtung der Zähne durch die Höckerspitzen entfällt daher.

Die Aufstellung der künstlichen Zähne im Zahnersatz wird weiter erleichtert dadurch, daß die distale Fläche des Zahns als Formfläche, vorzugsweise als konvexe Fläche, und die mesiale Fläche des benachbarten Zahns als Paßfläche, vorzugsweise konkave Fläche, ausgebildet ist. Durch die Ausgestaltung der aneinanderliegenden Flächen benachbarter Zähne gelangen die Zähne daher zwangsläufig in die richtige Stellung zueinander.

Die korrekte Aufstellung der künstlichen Zähne wird weiter erleichtert dadurch, daß die Zähne aus bukkaler oder labialer Sicht eine Zahnachse aufweisen, die senkrecht zur Okklusionsebene angeordnet ist.

Durch eine Kombination von Markierung, der Gestaltung der angrenzenden Flächen benachbarter Zähne und die Orientierung der Zahnachse kann also in den künstlichen Zahn die notwendige Information eingebaut werden, um die Kontaktpunkte in einer bestimmten Ebene anzuordnen. Dem Zahntechniker steht daher bei der Aufstellung der Zähne durch deren Form ein Hilfsmittel zur Verfügung, um auf einfache Weise eine richtige Positionierung der Zähne zu erreichen.

Der erfindungsgemäße Zahnsatz kann sowohl für eine Front- bzw. Eckzahn-geführte Okklusion wie auch für eine unilateral sowie bilateral balancierte Okklusion verwendet werden, wenn auf der Arbeitsseite die Molaren des Oberkiefers auf den bukkalen Abhängen Führungsflächen aufweisen, die mit den in den Molaren des Unterkiefers auf der bukkalen Außenfläche vorgesehenen Führungsflächen wechselwirken und auf der Balanceseite an den Molaren des Unterkiefers auf den bukkalen Abhängen Führungsflächen angeordnet sind, die mit den an den Molaren des Oberkiefers auf den palatinalen Abhängen vorgesehenen Führungsflächen wechselwirken. Für eine balancierte Okklusion wird der Eckzahn entsprechend abgeschliffen bzw. nach außen gekippt. Bei einer Lateralbewegung des Unterkiefers haben dann stets sämtliche Molaren Kontakt mit ihrem Antagonisten. Dies vermeidet ein Wegkippen des Gebisses durch einseitige Belastungen.

Bei Eckzahnführung wird eine behinderungsfreie Öffnungsbewegung ermöglicht, wenn der erste Prämolar des Oberkiefers bukkal mesial eine zwischen dem Dreieckswulst und dem Randwulst angeordnete Konkavität aufweist, die mit einer distal palatinal am Eckzahn des Unterkiefers vorgesehenen Führungsfläche wechselwirkt.

Eine Abstimmung der Stellung der unteren Schneidezähne auf die Neigung der Kurve von Monson wird ermöglicht, indem der untere Schneidezahn eine sich an die Schneidkante labial anschließende, in einem Winkel von 20° - 45° zur approximalen Zahnachse geneigte Fläche aufweist. Die Fläche kann parallel zur Kurve von Monson ausgerichtet werden, wodurch eine harmonische Führung bei der Öffnungsbewegung durch die lingualen Führungsflächen gewährleistet ist.

Eine weitere Anpassung des künstlichen Gebisses ist möglich, wenn der obere Schneidezahn eine sich an die Schneidkante palatinal anschließende, in einem Winkel von 20° - 45° zur approximalen Zahnachse geneigte Fläche aufweist.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren zeigen im einzelnen:
- Fig.1:: eine seitliche Ansicht eines menschlichen Schädels, bei dem die Okklusionsebene eingezeichnet ist;
- Fig.2a:: eine schematische Darstellung eines Ausschnitts aus einem menschlichen Unterkiefer, wobei die Kurve nach v. Spee eingezeichnet ist;
- Fig.2b:: eine schematische Darstellung eines Schnitts durch einen menschlichen Unterkiefer, wobei die Wilson-Kurve eingezeichnet ist;
- Fig.3:: eine Aufsicht auf Ober- und Unterkiefer, wobei die Anordnung der Kontaktpunkte auf den Käuflichen der Zähne eingezeichnet ist;
- Fig.4:: eine schematische Darstellung einer Ansicht eines Molaren und seines Antagonisten bei vollständiger Interkuspidation, gesehen von der approximalen Seite;
- Fig.5a:: eine okklusale Ansicht der Prämolaren und Molaren;
- Fig.5b:: eine Ansicht auf die Prämolaren und Molaren von bukkal;
- Fig.5c:: eine okklusale Aufsicht auf einen Molaren;
- Fig.5d:: eine okklusale Seitenansicht von Eckzahn und Prämolaren;
- Fig.6:: eine schematische Darstellung einer Ansicht eines Molaren und seines Antagonisten bei vollständiger Interkuspidation, gesehen von der approximalen Seite;
- Fig.7:: eine Aufsicht auf Ober- und Unterkiefer, wobei die Orientierung der Konkavitäten in Abhängigkeit von den Bewegungsrichtungen des Unterkiefers eingezeichnet ist;
- Fig.8:: eine seitliche Ansicht der oberen Schneidezähne in verschiedenen Phasen der Öffnungsbewegung;
- Fig.9:: eine Aufsicht auf Ober- und Unterkiefer, wobei die Lage der Führungsflächen bei Auflösung der Front- bzw. Eckzahnführung (balancierte Okklusion) eingezeichnet ist.

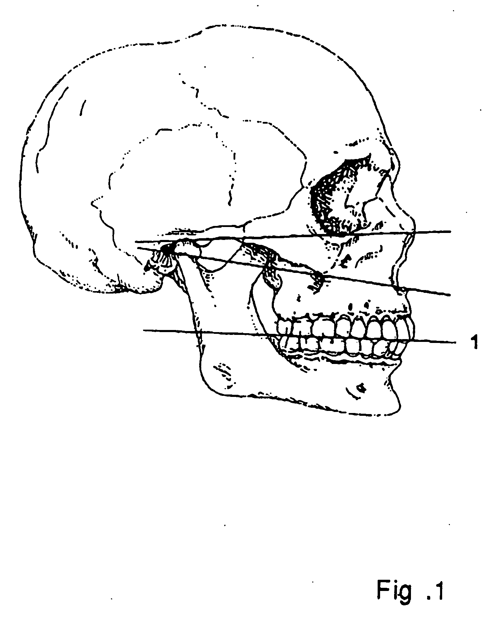

Figur 1 zeigt schematisch eine seitliche Ansicht eines menschlichen Schädels. Mit 1 ist die Okklusionsebene bezeichnet. Sie ist eine gedachte Linie, die zur Orientierung bei der Aufstellung der künstlichen Zähne dient. Sie kann nach bekannten Verfahren am (zahnlosen) Patienten bestimmt werden und auf einen Artikulator, in dem die Aufstellung der Zähne erfolgt, übertragen werden. Bei der Aufstellung der Zähne des erfindungsgemäßen Zahnsatzes werden die Zahnachsen senkrecht zur Okklusionsebene ausgerichtet. Dabei wird nur die Neigung der Zahnachse bei der Sicht von bukkal (Seitenzähne) bzw. labial (Frontzähne) beachtet. Eine approximale Neigung der Zahnachse bleibt unberücksichtigt.

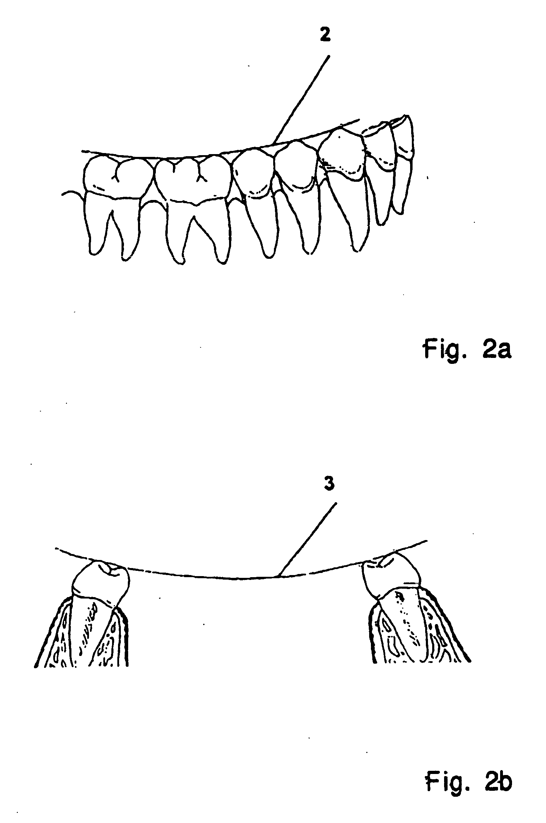

Fig.2 zeigt zur Erläuterung des physiologischen Hintergrunds den Verlauf der sagittalen und der transversalen Kompensationskurven. Das Kiefergelenk ist kein reines Scharniergelenk, das lediglich Rotationsbewegungen ausführt. Bei der Öffnungs- bzw. Schließbewegung des Kiefers treten neben der Rotationskomponente auch noch translatorische Komponenten auf. Die Kondylen des Unterkiefers sind daher im Gelenk verschiebbar. Bei einer Protrusionsbewegung bewegt sich der Unterkiefer nach vorne und unten. Er wird dabei geführt, indem die unteren Schneidezähne mit ihren Schneidkanten entlang der palatinalen Führungsflächen der vorderen oberen Schneidezähne gleiten. Die Beweglichkeit der Kondylen beeinflußt unmittelbar die Anordnung und die Gestalt der natürlichen Zähne. So verlieren bei Front- oder Eckzahnführung bei der Öffnungsbewegung alle Molaren des einen Kiefers gleichzeitig den Kontakt zu den Molaren des anderen Kiefers. Ebenso muß die Kaufläche so gestaltet sein, daß bei Protrusions-, Lateroprotrusions- und Laterotrusionsbewegungen keine Kollisionen zwischen den Zahnhöckern gegenüberliegender Molaren auftreten, da dies zu starken Krafteinwirkungen auf die Zähne und im Extremfall zu einem Abplatzen von Zahnteilen führt. Die Bewegungen des Kondylus im Gelenk müssen also bei der Aufstellung der künstlichen Zähne berücksichtigt werden. Dies geschieht, indem der obere Abschluß der Zähne auf einer bogenförmigen Kurve angeordnet wird.

Fig.2a zeigt die Kurve 2 nach v. Spee (sagittale Kompensationskurve). Sie ist eine in mesio-distaler Richtung verlaufende Kurve, die von der Verbindungslinie der Schneidekanten der Unterkiefer Frontzähne und der Höckerspitzen der Unterkiefer-Seitenzähne gebildet wird.

Figur 2b zeigt die Kurve 3 nach Wilson (transversale Kompensationskurve). Sie verläuft in transversaler Richtung und berührt die Höckerspitzen der Zähne im Seitenzahnbereich. Im unteren Zahnbogen verläuft sie konkav, im oberen konvex. Im unteren Zahnbogen kommt sie durch eine gleichmäßige Lingualneigung der rechten und linken Molaren zustande, im Oberkiefer entsprechend durch eine Bukkalneigung.

Die transversale und die sagittale Kompensationskurve sind in der Theorie von Monson zusammengefaßt. Danach sind die Zahnkauflächen wie auf einer Kugelfläche angeordnet. Die Zahnachsen sind so orientiert, daß sowohl die unteren wie die oberen Achsen in einem Punkt zusammenlaufen.

Die Zähne des erfindungsgemäßen Zahnsatzes sind so gestaltet, daß die Kontaktpunkte der gegenüberliegenden Zähne alle auf der sphärischen Kugelfläche nach Monson liegen. Im Gegensatz zu bekannten künstlichen Zähnen sind daher die Kontaktpunkte durch die Ausgestaltung der Zähne vorbestimmt und ergeben sich nicht erst aus der Aufstellung und der Bearbeitung der Zähne. Da alle Kontaktpunkte in einer sphärischen Ebene liegen, erfolgt auch der Kontaktschluß zwangsläufig gleichzeitig für alle Zähne. Dies gewährleistet eine gleichmäßige Kraftverteilung und einen definierten Abschluß der Schließbewegung.

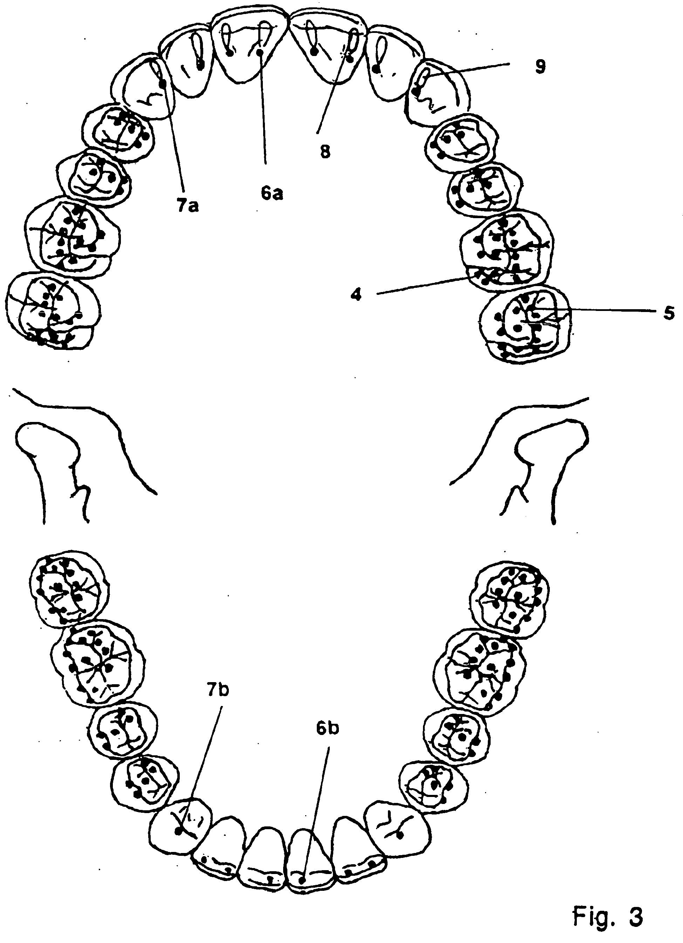

Figur 3 zeigt eine Aufsicht auf die Zahnreihen von Ober- und Unterkiefer. Die Ziffern 4 bis 7 bezeichnen die Kontaktpunkte zwischen den Zähnen von Ober- und Unterkiefer. Bei den Seitenzähnen greifen die Molaren jeweils mit dem Stampfhöcker in die Fossa des Antagonisten ein. Dabei werden für jeden Stampfhöcker jeweils drei Kontaktpunkte in Form eines Dreiecks ausgebildet (Tripodisierung) . Die Stampfhöcker bilden dabei Kontakte 4 auf der Randleiste sowie in der Fossa aus. Die Kontakte 5 in der Fossa sind jeweils auf, der Übersichtlichkeit halber nicht eingezeichneten, Dreiecksleisten vorgesehen. Die von einer Gruppe von Kontaktpunkten 4, 5 bestimmte Dreiecksfläche ist jeweils senkrecht zur Zahnachse angeordnet. Durch die senkrechte Orientierung der Zahnachse auf der. Kugelfläche nach Monson werden die Kontaktpunkte auf den Kompensationskurven ausgerichtet.

Im Frontzahnbereich wird bei maximaler Interkuspidation jeweils nur ein Kontaktpunkt 6a,b bzw. 7a,b zwischen den Antagoniscenpaaren ausgebildet. Durch die unterschiedliche Breite der unteren und oberen Schneidezähne können jedoch zwei Kontaktpunkte auf einem Zahn vorhanden sein, die dann jedoch zu verschiedenen Antagonisten ausgebildet werden. Der Kontaktpunkt 6a, 7a auf der palatinalen Seite der Frontalzähne bildet jeweils den Anfangspunkt einer Führungsfläche 8, 9 entlang denen bei der Öffnungs- bzw. Schließbewegung jeweils die Bewegung des Unterkiefers bei Schneidezahnführung 8 bzw. Eckzahnführung 9 geführt wird.

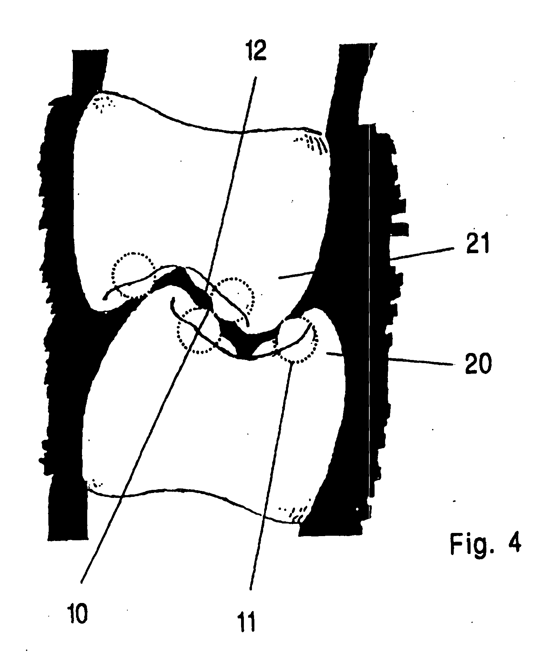

Fig. 4 zeigt eine schematische Darstellung einer Ansicht eines Molaren und seines Antagonisten bei vollständiger Interkuspidation, gesehen von der approximalen Seite. Die Kontaktpunkte in der Fossa sind jeweils auf Kugelflächen 10 angeordnet. Zur Verdeutlichung sind die Kugelflächen gestrichelt zu einem Kreis 11 ergänzt. Beidseitig an die Kugelflächen 11 schließen sich Konkavitäten 12 an, in denen sich die Höckerspitze des Antagonisten bei der Öffnungs- und Schließbewegung bewegt.

Bei einer Schließbewegung tritt die Höckerspitze des Stampfhöckers in die Fläche eines von den Kontaktpunkten in der Fossa des Antagonisten gebildeten Dreiecks ein. Die Wandung der Höckerspitze tritt in Wechselwirkung mit der Kugelfläche eines Kontaktpunkts des Antagonisten und gleitet an diesem. entlang, bis die Wandung auch mit den anderen beiden Kontaktpunkten in Wechselwirkung tritt. Es erfolgt eine Zentrierung der Höckerspitze in der Schlußstellung, in der die Wandung der Höckerspitze an allen drei Kugelflächen 10 der zugeordneten Kontaktpunkte anliegt (Tripodisierung). Auf diese Weise ist eine Zentrierung in der Horizontalen gewährleistet. Die Höckerspitze hat die Freiheit, in der Schlußstellung Kippbewegungen der vertikalen Achse auszuführen. Diese bewirkt, daß auch in vertikaler Richtung eine selbsttätige Ausrichtung gewährleistet ist.

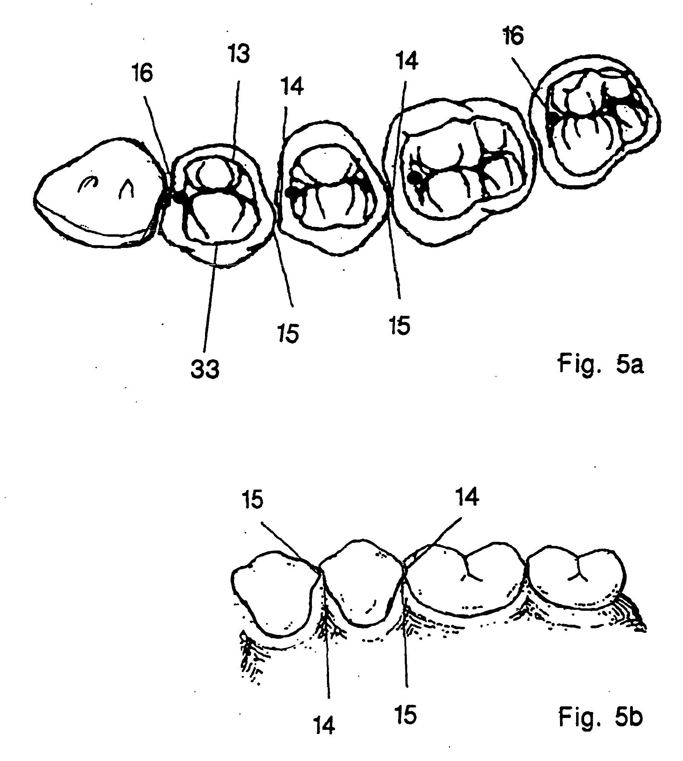

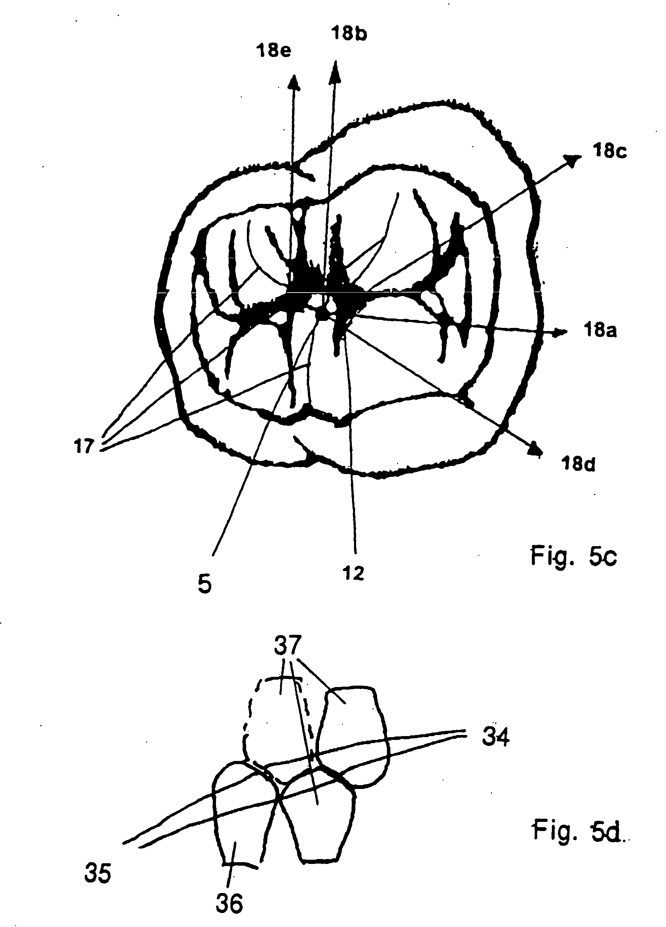

Figur 5a zeigt schematisch eine Aufsicht auf die 0kklusionsflächen im Seitenzahnbereich. Mit 13 ist die Begrenzung des okklusalen Tisches bezeichnet, der die Begrenzung der Kaufläche darstellt. Die mesiale Seite der Molaren zeigt jeweils eine konkave Fläche 14, während auf der distalen Fläche eine konvexe Fläche 15 vorgesehen ist. Diese zwischen nebeneinander angeordneten Zähnen aneinandergrenzenden Flächen 14 und 15 sind auch in der bukkalen Ansicht der Seitenzähne in Fig. 5b erkennbar. Durch die Plazierung und die Ausgestaltung der Flächen 14 und 15 kann eine korrekte Beziehung der Molaren in der horizontalen Ebene durch die Form des künstlichen Zahnes vorgegeben werden. An der mesialen und distalen Seite der Zähne ist jeweils ein Randleistenkontakt 16 vorgesehen, durch den die Positionierung der Zähne in vertikaler Richtung vorbestimmt werden kann. Der Randleistenkontakt ist jeweils am höchsten Punkt der Randleiste vorgesehen.

Fig.5c zeigt vergrößert eine Ansicht auf die Okklusionsfläche eines Molaren, wobei aus Gründen der Übersichtlichkeit nur für einen einzelnen Kontaktpunkt ein okklusaler Kompaß eingezeichnet ist. Die Anordnung der Konkavitäten 12, welche durch die dunklen Flächen innerhalb der Kaufläche in der Abbildung dargestellt ist, ergibt sich jeweils aus dem okklusalen Kompaß. Die einem einzelnen Kontaktpunkt 5 zugeordneten Konkavitäten verlaufen ausgehend von dem auf dem Leistengrat 17 angeordneten Kontaktpunkt 5 in Richtung der Laterotrusions- 18a, der Lateroprotrusions- 18b, der Protrusions- 18c, der Mediotrusions- 18d und der surtrusiven Retrusionsbewegung 18e des Unterkiefers. Diese Bedingung muß für alle in der Fossa gelegenen Kontaktpunkte erfüllt werden.

In Figur 5d, die eine okklusale Seitenansicht von Eckzahn und Prämolaren zeigt, ist in gestrichelter Weise eine andere physiologische Bißstellung angedeutet. Der obere erste Prämolar des Oberkiefers weist bukkal mesial eine zwischen der Dreiecksleiste und der Randleiste angeordnete Konkavität 34 auf, die mit einer bukkal distal am Eckzahn, bzw. bei anderer Bißstellung am ersten Prämolar des Unterkiefers vorgesehenen Führungsfläche wechselwirkt. Bisher konnte man verschiedene Bißarten nicht versorgen. Erst durch dieses Merkmal ist eine Versorgung möglich geworden.

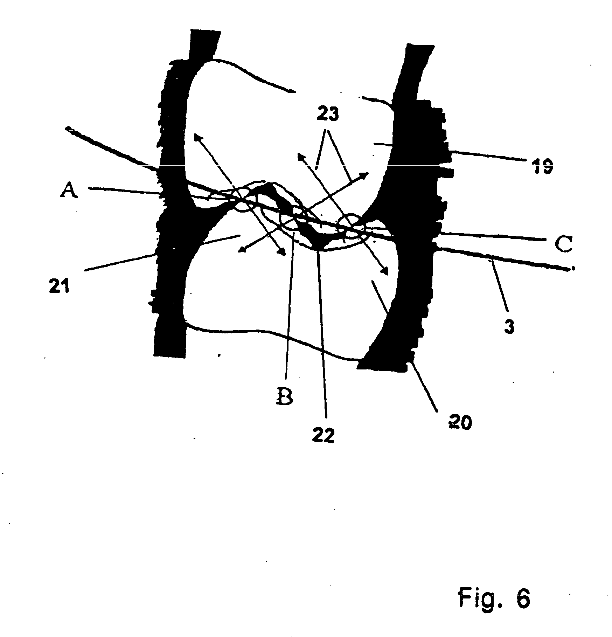

Figur 6 zeigt eine Ansicht auf ein Antagonistenpaar von mesial bei vollständiger Interkuspidation. Mit Ziffer 3 ist die saggitale Ansicht der Monson-Kurve bezeichnet, auf der alle Kontaktpunkte zu liegen kommen. Der Stampfhöcker 19 des Oberkiefermolaren greift in der Interkuspidationsstellung in die zwischen Scherhöcker 20 und Stampfhöcker 21 des Antagonisten liegende Fossa 22 ein. Die Spitze des Zahnhöckers liegt mit ihren seitlichen Abhängen an den Abhängen der Fossa, genauer auf den Dreiecks- und Randleisten (nicht dargestellt) an. An den mit A und C markierten Positionen wird dabei jeweils vom einen Antagonisten ein Randleistenkontakt auf der bukkalen bzw. lingualen Seite und vom anderen Antagonisten ein Dreiecksleistenkontakt ausgebildet. In der mit B markierten Position bilden beide Antagonisten einen Dreiecksleistenkontakt aus. Die Kraft wird folglich nicht über die Spitze des Zahnhöckers übertragen, weshalb die Belastungen im Zahn geringer ausfallen. Dasselbe gilt für den Eingriff des Stampfhöckers 22 des Unterkiefermolaren. Die in die Zähne eingeleiteten Kräfte, deren Vektoren mit 23 bezeichnet sind, addieren sich zu einer Kraft in Richtung der Zahnachse. Durch den Eingriff des Stampfhöckers in die Fossa des Antagonisten und den Kraftverlauf in Richtung der Zahnachse ist eine bukkolinguale Stabilität der Zahnreihe gewährleistet und Kippbewegungen des Gebisses werden verhindert.

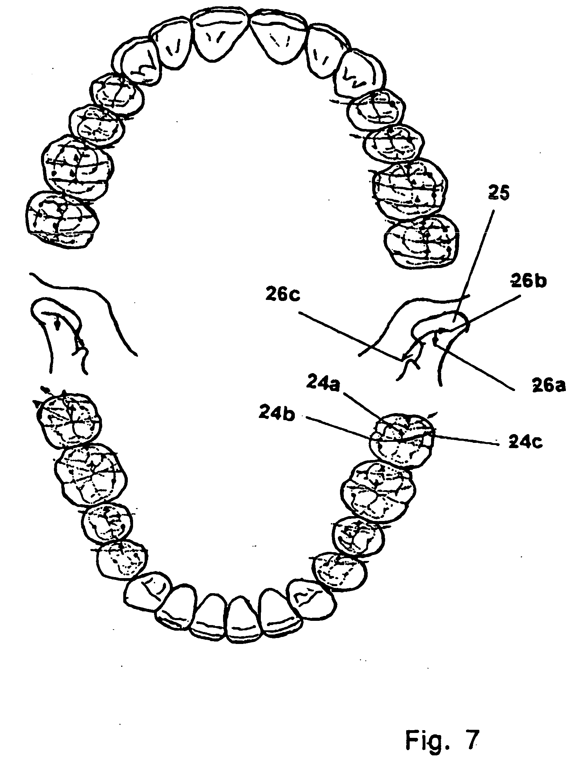

Fig. 7 zeigt eine Aufsicht auf die Zahnreihen des Ober- und Unterkiefers, wobei der Bewegungsverlauf der Stampfhöckerspitzen aus der Schlußstellung eingezeichnet ist. Der Bewegungsverlauf wird durch die Bewegungen der Kondylen im Kiefergelenk bestimmt. Sie sind schematisch zusammengefaßt im okklusalen Kompaß. Dieser ist in Fig. 7 für jeden Stampfhöcker des Antagonisten eingezeichnet, wobei aus Gründen der Übersichtlichkeit nur die Protrusions- 24a, die Laterotrusions- 24b und die Lateroprotrusionsrichtung 24c eingezeichnet ist. Die Bewegungen gehen von der aus jeweils drei Kontaktpunkten gebildeten Dreiecksfläche aus. Diese ist aus Gründen der Übersichtlichkeit in der Figur nicht dargestellt. Ihr Zentrum befindet sich jedoch jeweils am Ausgangspunkt einer Gruppe von drei Bewegungspfeilen. Im Kondylus 25 sind jeweils die Bewegungsverläufe mit ihrer horizontalen Komponente angegeben. Dabei bezeichnet 26a die Bewegungsrichtung des Kondylus 27 bei einer Protrusion, 26b bei einer Laterotrusion und 26c bei einer Lateroprotrusion. Entsprechend ergibt sich der Bewegungsverlauf der Stampfhöckerspitze aus der Schlußstellung in der Fossa eines Molaren. Stellvertretend ist bei einem Molaren die Richtung der Protrusion mit 24a, der Laterotrusion mit 24b und der Lateroprotrusion mit 24c bezeichnet. Die in Fig.5c stellvertretend für einen bestimmten Molaren angegebenen Konkavitäten 12 verlaufen jeweils entlang der Bewegungsbahnen 24 des Stampfhöckers.

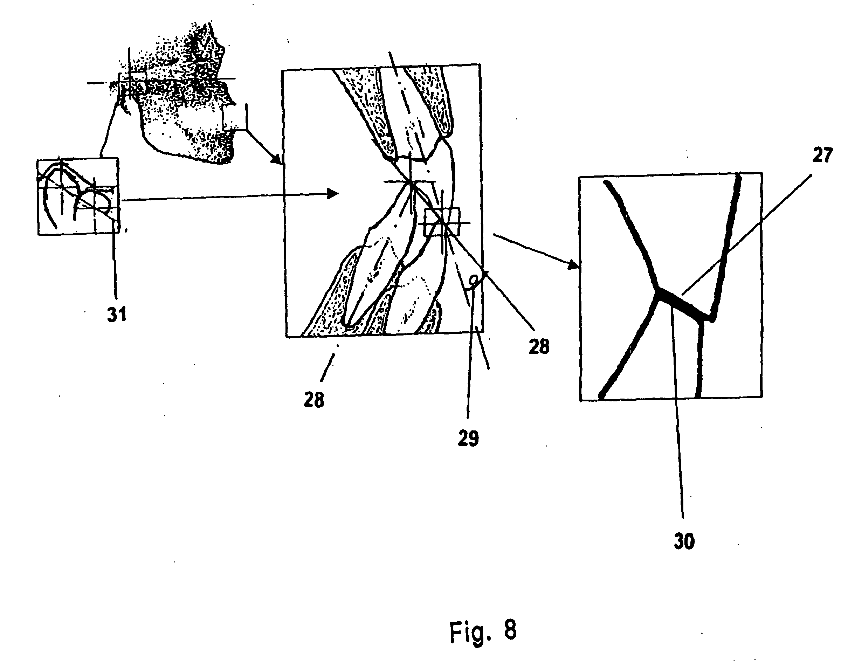

Fig. 8 zeigt eine seitliche Ansicht eines Schneidezahnpaares. Auf der palatinalen Seite-des oberen Schneidezahns ist eine Fläche 27 vorgesehen, die sich an die Schneidkante anschließt. Sie bildet mit der approximalen Zahnachse 28 einen Winkel von ca. 30°. Am unteren Schneidezahn ist labial eine Fläche 30 vorgesehen, die sich an die Schneidkante anschließt und mit der approximalen Zahnachse einen Winkel von ca. 30° bildet. Mit Hilfe dieser Flächen kann durch Variation des Neigung der approximalen Zahnachse gegen die Vertikale die Neigung der Gelenkbahn 31 ausgeglichen werden und so eine harmonische Öffnungs- und Schließbewegung bei Frontzahnführung erreicht werden.

Die künstlichen Zähne des Ausführungsbeispiels eignen sich sowohl für einen Gebißaufbau mit Front- bzw. Eckzahnführung wie auch mit balancierter Okklusion. Die balancierte Okklusion wird bisher beim Aufbau künstlicher Gebisse überwiegend bevorzugt, da bei dieser Ausführung ein Aushebeln des Gebisses bei Kaubewegungen weitgehend vermieden werden kann. Um eine balancierte Okklusion zu verwirklichen, müssen entweder die oberen Eckzähne durch Schleifen bearbeitet werden, um die Eckzahnführung aufzuheben oder die Eckzähne geringfügig nach außen gekippt werden.

Bei der balancierten Aufstellung bleiben die seitlichen Zähne während der Verschiebung in Kontakt. Es werden also nicht nur Kontaktpunkte in der Schlußstellung ausgebildet.

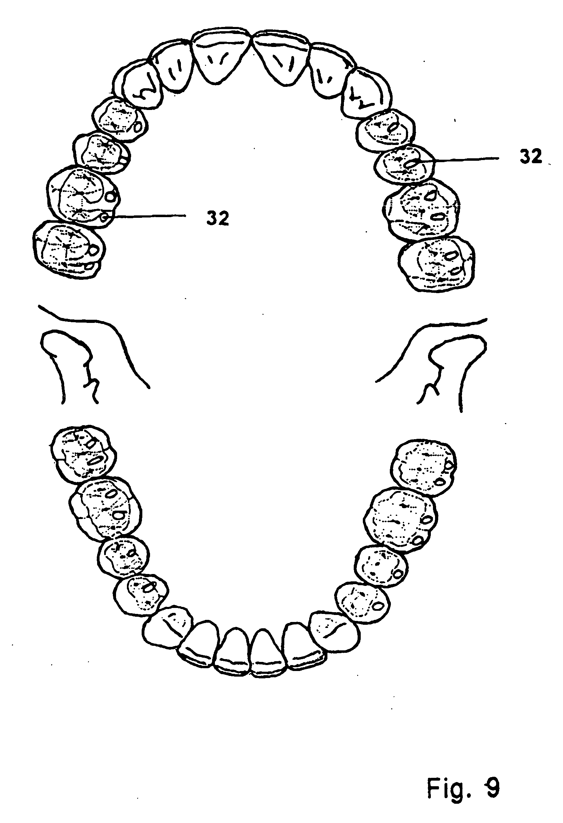

Fig. 9 zeigt eine Aufsicht auf die Zahnreihen von Unter- und Oberkiefer. Mit Ziffer 32 sind die Gleitflächen bezeichnet, entlang denen die jeweiligen Antagonistenpaare bei einer Lateralbewegung verschoben werden.

Der erfindungsgemäße Zahnsatz erlaubt eine Aufstellung der Zähne sowohl für eine Front- bzw. Eckzahnführung als auch für eine balancierte Okklusion. Durch die Form der Zähne wird die korrekte Aufstellung der Zähne vorbestimmt, so daß sich das künstliche Gebiß sehr einfach auf die vom Patienten abgenommenen Daten abstimmen läßt. Durch die vorbestimmte Lage der Kontaktpunkte lassen sich verschiedene Stellungen der Antagonistenpaare verwirklichen. So ist die Kontaktbeziehung nicht auf ein bestimmtes Antagonistenpaar beschränkt. Die Zahnreihen lassen sich auch um eine halbe Zahnbreite in mesialer bzw. distaler Richtung verschieben, ohne daß die korrekte Kontaktbeziehung verloren geht. So kann z.B. bei sehr beengten Platzverhältnissen ein Ausgleich geschaffen werden, indem auf einen Seitenzahn verzichtet wird und dennoch die korrekte Kontaktbeziehung erhalten bleiben.

Die Aufstellung der Zähne erfolgt in der Weise, daß zunächst die Zahnreihen des Unterkiefers ausgehend von den vorderen Schneidezähnen nach distal fortschreitend aufgestellt werden. Dabei wird die Lage der Kontaktpunkte durch die Form der Zähne und die senkrechte Orientierung der Zahnachsen im Seitenbereich zur Okklusionsebene vorgegeben. Die Zahnstellung des Oberkiefers ergibt sich durch Aufsetzen der Molaren des Oberkiefers auf die Antagonisten des Unterkiefers. Nach Kontrolle am Patienten und Polymerisation ist ein weiteres Einschleifen der Zähne praktisch nicht erforderlich.

### Bezugszeichenliste

- 1: Okklusionsebene
- 2: Kurve nach von Spee
- 3: Kurve nach Wilson, saggitale Ansicht der Kurve nach Monson
- 4: Randleistenkontakt
- 5: Dreiecksleistenkontakt
- 6a,b: Kontaktpunkt Schneidezahn
- 7a,b: Kontaktpunkt Eckzahn
- 8: Führungsfläche Schneidezahn
- 9: Führungsfläche Eckzahn
- 10: Kugelflächen
- 11: Kreis
- 12: Konkavität
- 13: okklusaler Tisch
- 14: konkave Fläche
- 15: konvexe Fläche
- 16: Randleistenkontakt
- 17: Leistengrat (Dreiecksleistengrat)
- 18a: Protrusion
- 18b: Laterotrusion
- 18c: Lateroprotrusion
- 18d: Mediotrusion
- 18e: surtrusive Retrusion
- 19: Stampfhöcker
- 20: Scherhöcker
- 21: Stampfhöcker
- 22: Fossa
- 23: Kraftvektor
- 24a: Protrusion
- 24b: Laterotrusion
- 24c: Lateroprotrusion
- 25: Kondylus
- 26a: Protrusion
- 26b: Laterotrusion
- 26c: Lateroprotrusion
- 27: Fläche
- 28: approximale Zahnachse
- 29: Winkel
- 30: Fläche
- 31: Gelenkbahnneigung
- 32: Gleitflächen
- 33: Randleiste
- 34: Konkavität
- 35: Führungsfläche
- 36: Eckzahn
- 37: erster Prämolar

## Patentansprüche

1. Zahnsatz aus vorgefertigten Zähnen für die Molaren und/oder Prämolaren des Gebisses, bestehend aus ersten aus einer für den einen Kiefer vorgesehenen Gruppe von Zähnen und aus zweiten aus einer für den anderen Kiefer vorgesehenen Gruppe von Antagonisten gewählten Zähnen, wobei in der jeweiligen Fossa eines Molaren bzw. Prämolaren jeweils mindestens drei Kontaktpunkte (4,5) vorgesehen sind, an denen in Interkuspidationsstellung ein Stampfhöcker des Antagonisten zur Anlage gelangt, sofern die Zahnachsen der Zähne senkrecht zur Okklusionsebene ausgerichtet sind, wobei die Kontaktpunkte (4,5) bei aufgestellten Zähnen auf der sphärischen Kurve von Monson angeordnet sind.

2. Zahnsatz nach Anspruch 1, **dadurch gekennzeichnet, dass** pro Molaren oder Prämolaren mindestens fünf Kontaktpunkte vorgesehen sind.

3. Zahnsatz nach Anspruch 1 oder 2, **dadurch gekennzeichnet, dass** die in der Fossa vorgesehenen Kontaktpunkte (5) auf einer Kugelfläche (10) angeordnet sind.

4. Zahnsatz nach einem der Ansprüche 1 bis 3, **dadurch gekennzeichnet, dass** in der Fossa Dreiecksleisten (17) und/oder Randleisten (33) vorgesehen sind und die Kontaktpunkte (5) auf den Abhängen der Dreiecksleisten und/oder Randleisten angeordnet sind.

5. Zahnsatz nach einem der Ansprüche 1 bis 4, **dadurch gekennzeichnet, dass** benachbart zu den Dreiecksleisten und ausgehend von den Kontaktpunkten (5) Konkavitäten (12) in Richtung der Laterotrusions- und/oder der Protrusions- und/oder der Lateroprotrusions- und/oder der Mediotrusions- und/oder der surtrusiven Retrusionsbewegung des Unterkiefers angeordnet sind.

6. Zahnsatz nach einem der Ansprüche 1 bis 5, **dadurch gekennzeichnet, dass** das Verhältnis der vom Umfang des Zahnes in Aufsicht gebildeten Fläche zur lichten Fläche des okklusalen Tisches (13) 55 bis 65% beträgt.

7. Zahnsatz nach einem der Ansprüche 1 bis 6, **dadurch gekennzeichnet, dass** auf der mesialen und/oder der distalen Randleiste des Zahns ein Randleistenkontakt (16) vorgesehen ist.

8. Zahnsatz nach einem der Ansprüche 1 bis 7, **dadurch gekennzeichnet, dass** auf der Arbeitsseite die Molaren des Oberkiefers auf den bukkalen Abhängen Führungsflächen (32) aufweisen, die mit den in den Molaren des Unterkiefers auf der bukkalen Außenfläche vorgesehenen Führungsflächen (32) wechselwirken und auf der Balanceseite an den Molaren des Unterkiefers auf den bukkalen Abhängen Führungsflächen (32) angeordnet sind, die mit den an den Molaren des Oberkiefers auf den palatinalen Abhängen vorgesehenen Führungsflächen (32) wechselwirken.

9. Zahnsatz nach einem der Ansprüche 1 bis 8, **dadurch gekennzeichnet, dass** der erste Prämolar des Oberkiefers bukkal mesial eine zwischen der Dreiecksleiste und der Randleiste angeordnete Konkavität aufweist, die mit einer distal palatinal am Eckzahn des Unterkiefers vorgesehenen Führungsfläche wechselwirkt.

10. Zahnsatz nach einem der Ansprüche 1 bis 9, **dadurch gekennzeichnet, dass** der obere erste Prämolar des Oberkiefers bukkal mesial eine zwischen der Dreiecksleiste und der Randleiste angeordnete Konkavität (34) aufweist, die mit einer bukkal distal am Eckzahn oder ersten Prämolar des Unterkiefers vorgesehenen Führungsfläche (35) wechselwirkt.

11. Zahnsatz aus vorgefertigten Zähnen für die Eck- und Schneidezähne des Gebisses, bestehend aus einer ersten für den einen Kiefer vorgesehenen Gruppe von Zähnen und zweiten für den anderen Kiefer vorgesehenen Antagonisten, wobei die Zähne auf den den Antagonisten gegenüberliegend angeordneten palatinalen Flächen mindestens einen Kontaktpunkt (6,7) aufweisen, an dem der Antagonist zur Anlage gelangt, sofern die Zahnachsen der Zähne senkrecht zur Okklusionsebene ausgerichtet sind, wobei die Kontaktpunkte (6,7) bei aufgestellten Zähnen auf der spherischen Kurve von Monson angeordnet sind.

12. Zahnsatz nach Anspruch 11, **dadurch gekennzeichnet, dass** die Zähne zwei Kontaktpunkte aufweisen.

13. Zahnsatz nach einem der Ansprüche 11 bis 12 **dadurch gekennzeichnet, dass** der untere Schneidezahn eine sich an die Schneidkante labial anschließende, in einem Winkel von 20° bis 45° zur approximalen Zahnachse (28) geneigte Fläche (30) aufweist.

14. Zahnsatz nach einem der Ansprüche 11 bis 13, **dadurch gekennzeichnet, dass** der obere Schneidezahn eine sich an die Schneidkante palatinal anschließende, in einem Winkel von 20° bis 45° zur approximalen Zahnachse (28) geneigte Fläche (27) aufweist.

15. Zahnsazt nach einem der Anspruche 1-14,
**dadurch gekennzeichnet, dass**
die distale Fläche einer Zahn der Formfläche und die mesiale Fläche des benachbarten Zahns als Passfläche ausgebildet ist.

16. Zahnsatz nach einem der Ansprüche 1 bis 15, **dadurch gekennzeichnet, dass** die distale Formfläche (15) als konvexe Fläche und die mesiale Paßfläche (14) als konkave Fläche ausgebildet sind.

## Claims

1. Denture set comprising prefabricated teeth for the molars and/or premolars, of the dentition, consisting of first teeth selected from a group of teeth which is provided for one jaw and of second teeth selected from a group of antagonists which is provided for the other jaw, in each case at least three contact points (4,5) on which a cusp of the antagonist comes to rest in the intercuspidation position if the tooth axes of the teeth are aligned perpendicularly to the occlusion plane, being provided in the respective fossa of a molar or premolar, the contact points (4,5) in the case of mounted teeth being arranged on the spherical Monson curve.

2. Denture set according to Claim 1, **characterized in that** at least five contact points are provided per molar or premolar.

3. Denture set according to Claim 1 or 2, **characterized in that** the contact points (5) provided in the fossa are arranged on a spherical surface (10).

4. Denture set according to any of Claims 1 to 3, **characterized in that** triangular ridges (17) and/or marginal ridges (33) are provided in the fossa, and the contact points (5) are arranged on the slopes of the triangular ridges and/or marginal ridges.

5. Denture set according to any of Claims 1 to 4, **characterized in that** concavities (12) in the direction of the laterotrusion and/or of the protrusion and/or of the lateroprotrusion and/or of the mediotrusion and/or of the surtrusive retrusion movement of the mandible are provided adjacent to the triangular ridges and starting from the contact points (5).

6. Denture set according to any of Claims 1 to 5, **characterized in that** the ratio of the area formed by the circumference of the tooth in plan view to the internal area of the occlusal table (13) is from 55 - 65%.

7. Denture set according to any of Claims 1 to- 6, **characterized in that** the marginal ridge contact (16) is provided on the mesial and/or the distal marginal ridge of the tooth.

8. Denture set according to any of Claims 1 to 7, **characterized in that**, on the working side, the maxillary molars have guide surfaces (32) on the buccal slopes, which guide surfaces interact with the guide surfaces (32) provided in the mandibular molars on the buccal outer surface and, on the balance side, guide surfaces (32) are arranged on the mandibular molars on the buccal slopes, which guide surfaces interact with the guide surfaces (32) provided on the maxillary molars, on the palatinal slopes.

9. Denture set according to any of Claims 1 to 8, **characterized in that** the first maxillary premolar has a buccal mesial concavity arranged between the triangular ridge and the marginal ridge, which concavity interacts with a distal palatinal guide surface provided on the mandibular canine tooth.

10. Denture set according to any of Claims 1 to 9, **characterized in that** the upper first maxillary premolar has a buccal mesial concavity (34) arranged between the triangular ridge and the marginal ridge, which concavity interacts with a buccal distal guide surface (35) provided on the canine tooth or first mandibular premolar.

11. Denture set comprising prefabricated teeth for the canine teeth and incisors of the dentition, consisting of a first group of teeth which is provided for one jaw and second antagonists provided for the other jaw, the teeth having at least one contact point (6,7) on the palatinal surfaces arranged opposite the antagonists, on which contact point the antagonist comes to rest if the tooth axes of the teeth are aligned perpendicularly to the occlusion plane, the contact points (6,7) in the case of mounted teeth being arranged on the spherical Monson curve.

12. Denture set according to Claim 11, **characterized in that** the teeth have two contact points.

13. Denture set according to either of Claims 11 and 12, **characterized in that** the lower incisor has a surface (30) which is labially adjacent to the cutting edge and inclined at an angle of 25° to 45° to the approximal tooth axis (28).

14. Denture set according to any of Claims 11 to 13, **characterized in that** the upper incisor has a surface (27) which is palatinally adjacent to the cutting edge and inclined at an angle of from 20° to 45° to the approximal tooth axis (28).

15. Denture set according to any of Claims 1 to 14, **characterized in that** the distal surface of a tooth is in the form of a shaped surface, and the mesial surface of the adjacent tooth is in the form of a surface of fit.

16. Denture set according to any of Claims 1 to 15, **characterized in that** the distal shaped surface (15) is in the form of a convex surface and the mesial surface of fit (14) is in the form of a concave surface.

## Revendications

1. Jeu de dents constitué de dents préfabriquées pour les molaires et/ou les prémolaires de la denture, constitué de premières dents choisies parmi un groupe de dents prévu pour l'une des mâchoires et de deuxièmes dents choisies parmi un groupe de dents antagonistes prévues pour l'autre mâchoire, au moins trois points de contact (4, 5) étant prévus dans la fosse de chaque molaire ou de chaque prémolaire et sur lesquels le sommet des pilons de l'antagoniste vient se placer en position d'intercuspidation pour autant que l'axe des dents soit orienté perpendiculairement au plan d'occlusion, dans lequel les points de contact (4, 5) sont disposés sur la courbe sphérique de Monson lorsque les dents sont posées l'une sur l'autre.

2. Jeu de dents selon la revendication 1, **caractérisé en ce qu'**au moins cinq points de contact sont prévus pour chaque molaire ou prémolaire.

3. Jeu de dents selon les revendications 1 ou 2, **caractérisé en ce que** les points de contact (5) prévus dans la fosse sont disposés sur une surface sphérique (10).

4. Jeu de dents selon l'une des revendications 1 à 3, **caractérisé en ce que** des languettes triangulaires (17) et/ou des languettes de bordure (33) sont prévues dans la fosse et **en ce que** les points de contact (5) sont disposés sur les pentes des languettes triangulaires et/ou des languettes de bordure.

5. Jeu de dents selon l'une des revendications 1 à 4, **caractérisé en ce qu'**au voisinage des languettes triangulaires et partant des points de contact (5), des concavités (12) sont orientées en direction du déplacement de latérotrusion et/ou de protrusion et/ou de latéroprotrusion et/ou de médiotrusion et/ou de rétrusion surtrusive de la mâchoire inférieure.

6. Jeu de dents selon l'une des revendications 1 à 5, **caractérisé en ce que** le rapport entre la surface formée dans une vue en plan par le périmètre de la dent représente de 55 à 65 % de la surface intérieure de la table occlusale (13).

7. Jeu de dents selon l'une des revendications 1 à 6, **caractérisé en ce qu'**un contact (16) avec la languette de bordure est prévu sur la languette de bordure mésiale et/ou sur la languette de bordure distale de la dent.

8. Jeu de dents selon l'une des revendications 1 à 7, **caractérisé en ce que** sur le côté du travail, les molaires de la mâchoire supérieure présentent sur les pentes buccales des surfaces de guidage (32) qui coopèrent avec les surfaces de guidage (32) prévues sur la surface extérieure buccale des molaires de la mâchoire inférieure et **en ce que** des surfaces de guidage (32) sont disposées sur les pentes buccales situées du côté de balance des molaires de la mâchoire inférieure et coopèrent avec les surfaces de guidage (32) prévues sur les pentes palatines des molaires de la mâchoire supérieure.

9. Jeu de dents selon l'une des revendications 1 à 8, **caractérisé en ce que** la première prémolaire de la mâchoire supérieure présente du côté buccal mésial une concavité disposée entre la latte triangulaire et la latte de bordure et qui coopère avec une surface de guidage prévue en position distale palatine sur la canine de la mâchoire inférieure.

10. Jeu de dents selon l'une des revendications 1 à 9, **caractérisé en ce que** la première prémolaire supérieure de la mâchoire supérieure présente sur le côté buccal mésial une concavité (34) disposée entre la languette triangulaire et la languette de bordure et qui coopère avec une surface de guidage (35) prévue sur le côté buccal distal de la canine ou de la première prémolaire de la mâchoire inférieure.

11. Jeu de dents constitué de dents préfabriquées pour les canines et les incisives de la denture, constitué de premières dents d'un groupe prévu pour l'une des mâchoires et de deuxièmes dents d'un groupe de dents antagonistes prévues pour l'autre mâchoire, dans lequel les dents présentent sur leur surface palatine opposée à la dent antagoniste au moins un point de contact (6, 7) sur lequel la dent antagoniste vient se placer pour autant que l'axe des dents soit orienté perpendiculairement au plan d'occlusion, et dans lequel les points de contact (6, 7) sont disposés sur la courbe sphérique de Monson lorsque les dents sont posées l'une sur l'autre.

12. Jeu de dents selon la revendication 11, **caractérisé en ce que** les dents présentent deux points de contact.

13. Jeu de dents selon l'une des revendications 11 à 12, **caractérisé en ce que** la dent incisive inférieure présente une surface (30) qui se raccorde du côté labial au bord incisif et qui est inclinée à un angle de 20° à 45° par rapport à l'axe proximal (28) de la dent.

14. Jeu de dents selon l'une des revendications 11 à 13, **caractérisé en ce que** la dent incisive supérieure présente une surface (27) qui se raccorde du côté palatin au bord incisif et qui est inclinée sous un angle de 20° à 45° par rapport à l'axe proximal (28) de la dent.

15. Jeu de dents selon l'une des revendications 1 à 14, **caractérisé en ce que** la surface distale d'une dent est configurée comme surface façonnée et la surface mésiale de la dent voisine comme surface d'adaptation.

16. Jeu de dents selon l'une des revendications 1 à 15, **caractérisé en ce que** la surface façonnée (15) distale est configurée comme surface convexe et la surface mésiale d'adaptation (14) comme surface concave.
